# EUROPÄISCHE PATENTSCHRIFT

(11) **EP 1 157 495 B1**
(45) Veröffentlichungstag und Bekanntmachung des Hinweises auf die Patenterteilung: **16.01.2008**
(21) Anmeldenummer: 00902665.9
(22) Anmeldetag: 26.01.2000
(51) Int. Cl.: H04L 1/00

(54) **TELEKOMMUNIKATIONS-NACHRICHTENNETZ-STATION FÜR DIE ÜBERTRAGUNG VON DIGITALISIERTEN DATEN**
TELECOMMUNICATIONS NETWORK STATION FOR TRANSMITTING DIGITALISED DATA
STATION DE RESEAU DE TELECOMMUNICATION POUR LA TRANSMISSION DE DONNEES NUMERISEES

(30) Priorität: 26.02.1999 DE 19910144
(43) Veröffentlichungstag der Anmeldung: 28.11.2001
(73) Patentinhaber: Deutsche Telekom AG, 53113 Bonn (DE)
(72) Erfinder: ANTKOWIAK, Jochen, D-12524 Berlin (DE); BÖLIKE, Bernd, D-15711 Königs Wusterhausen (DE); HÄNSSGEN, Diethard, D-12435 Berlin (DE)
(86) Internationale Anmeldenummer: PCT/EP2000/001007
(87) Internationale Veröffentlichungsnummer: WO 2000/052870

(56) Entgegenhaltungen:
- EP-A- 0 647 066
- EP-A- 0 660 580
- WO-A-96/06399
- WO-A-99/03222
- US-A- 4 907 277
- US-A- 5 768 527

## Beschreibung

Die Erfindung bezieht sich auf ein Verfahren der im Oberbegriff des Patentanspruchs 1 näher bezeichneten Art und eine Vorrichtung, wie im Oberbegriff des Patentanspruchs 7 näher benannt. Verfahren und Vorrichtungen solcher Art sind z. B. aus EP 0 660 580 A2 bekannt. Die darin beschriebene "Image-Information format control device" ist für eine Übertragung von digitalen breitbandigen Signalen von unterschiedlichen Quellen vorgesehen, die von Nutzern über einen Rückkanal ausgewählt werden, wobei die Quellensignale, CIF oder QCIF, zunächst gespeichert und einer bekannten Signalanalyse unterzogen werden. Für den Fall, dass vom Nutzer der gleiche Signalformatstandard, der vom Quellensignal vorliegt, verlangt wird, wird dieses unverändert aus dem Speicher ausgelesen. Für den Fall, dass das Quellensignal im CIF- Standardformat gespeichert ist, vom Nutzer aber das einfachere QCIF-Standardformat verlangt wird, werden die für dieses Standardformat benötigten Daten aus den gespeicherten Daten extrahiert und die übrigen Daten weggelassen.

Für eine universelle Anwendung, wie sie für eine Anwendung in Stationen eines breitbandigen Telekommunikations-NachrichtenNetzes erforderlich ist, weist diese Lösung, die einen Speicher für das größte Datenformat benötigt, jedoch wesentliche Nachteile auf. Sie erlaubt wegen des Speichers keine Konvertierung von Live-Signalen, keine Aufwärts- Konvertierung und auch keine Bildverbesserung mittels Bitfehlerbeseitigung.

Unter dem Begriff: "konvertieren des Datenformates" ist allgemein die Wandlung des Signals in ein anderes Datenformat zu verstehen. Bei der Veröffentlichung in EP 0 660 580 A2 handelt es sich um ein Abwärtskonvertieren zu niederen Datenformaten = down-conversion.

Stationen eines Telekommunikations- Nachrichtennetzes sind z. B. aus den Veröffentlichungen: DAVIC 1.0 Specification Part 04, Delivery System Architecture And Interfaces, Digital Audio-Visual Council 1995 - 1999 und: DAVIC 1.3.1 Specification Part 4, Delivery System Architecture And Interfaces Digital Audio-Visual Council 1998, beide Published by Digital Audio-Visual Council, Geneva, Switzerland, bekannt.

Aus WO-A-96/06399 ist auch ein "Verfahren zur simultanen digitalen Verarbeitung mehrerer von/zu Audio-Videogeräten zu übertragenden Datenpakete in einem Rechnersystem" bekannt. Die dort auftretenden Schnittstellenprobleme werden, im Gegensatz zur sonst verwendeten hardwaregestützten Datenvermittlung, durch ein softwaregestütztes Datenvermittlungssystem gelöst.

In Nachrichtennetzen, wie sie z. B. in "brockhaus elektronik" definiert sind, treten auch für digitalisierte Signale Fehler auf, die normalerweise durch den Fehlerschutz kompensiert werden. Wenn dieser Fehlerschutz nicht ausreicht, kommt es zur Verschlechterung oder zum völligen Ausfall des Signals oder der Signale. Deshalb wird versucht, an verschiedenen Stationen im Nachrichtennetz eine Signalüberwachung vorzunehmen, die Quality of Service = QoS sichern soll. Schon bei der Codierung kann es zu Codierungsfehlern, die oft Blockfehler sind, kommen, die vom Fehlerschutz nicht korrigiert werden können.

Im Netz soll möglichst keine weitere Verschlechterung entstehen. Oftmals ist der Zugang zum Nutzer die kritischste Stelle. Deshalb werden gegenwärtig viele Anstrengungen unternommen, um diesen Zugang breitbandiger zu machen. Solche bekannten Möglichkeiten zur Erhöhung der Bandbreite sind beispielsweise ADSL (Asymmetric Digital Subscriber Line), VDSL (Very high bit rate Digital Subscriber Line) oder allgemein xDSL.

Die Erhöhung der Bandbreite hat zur Folge, daß keine weitere merkliche Verschlechterung des Signals entsteht oder daß ein hochqualitatives Signal überhaupt übertragen werden kann. Mit breitbandigen Übertragungsverfahren, wie MMDS (Microwave Multipoint Distribution Systems), ist von vornherein eine hochqualitative Übertragung möglich. Die neuen und besseren Bildwiedergabeeinrichtungen verstärken den Wunsch der Nutzer nach hochqualitativer Bildübertragung.

Betreiber von Nachrichtennetzen haben die Aufgabe, daß sie eine möglichst gute Signalübertragung gewährleisten müssen. Es besteht aber das technische Problem, daß es Eingangssignale gibt, die aus Gründen der Aufnahme, des Standards, der Codierung, einer schmalbandigen Zubringerstrecke oder mehrerer dieser Gründe eine schlechtere Qualität haben, als dies vom Nutzer gewünscht wird. Der Nutzer verarbeitet aber die Signale im allgemeinen Falle so, wie er sie empfängt.

Gemäß der Aufgabe der Erfindung soll durch ein neues Verfahren eine Station eines Telekommunikations- Nachrichtennetzes für die breitbandige Übertragung von digitalisierten Daten so ausgestattet werden, daß der einzelne Nutzer auch eine Erhöhung der Signalqualität gegenüber der Qualität des ausgewählten Eingangssignals hinaus, das nicht den höchsten Qualitätsstandards entspricht und deshalb nachfolgend als verbesserungsfähiges Signal bezeichnet wird, bzw. ein höheres Signalformat auswählen und erhalten kann. Im Gegensatz zu einer generellen Beeinflussung der Qualität wird die Bearbeitung des Signals entsprechend der vom einzelnen Nutzer verlangten und ausgewählten Qualität, nachfolgend als "spezielle Signalverbesserung" bezeichnet, durchgeführt. Solche Signalverbesserungen sind beispielsweise das Herabsetzen des Rauschens oder die Erhöhung der Kantenschärfe im dekodierten Bildsignal.

Diese Aufgabe löst die Erfindung durch die im Kennzeichen des Patentanspruches 1 beschriebenen Merkmale. Vorteilhafte Ausgestaltungen des Verfahrens und Weiterbildungen sind in den Kennzeichen der Unteransprüche 2 bis 6 beschrieben. Eine Vorrichtung zur Durchführung dieses Verfahrens kennzeichnet der Anspruch 7 und der Anspruch 8 eine Weiterbildung hierzu.

Der Widerspruch, daß einerseits die Netzbetreiber auf minderwertige Eingangssignale keinen Einfluß haben und daß der Netzbetreiber aber möglichst hochwertige Signale an den Nutzer liefern will, wird dadurch gelöst, daß eine zusätzliche Funktion im Netz eingeführt wird, die die Anhebung der Signalqualität über die eingangsseitige Signalqualität ermöglicht.
Für einen Nutzer, der eine solche vielseitige und aufwendige Signalbearbeitung selbst betreiben will, würden hierbei hohe Kosten entstehen. Die Signalbearbeitung würde auch bei ihm zeitlich nur begrenzt ausgenutzt.

Für einzelne Anwendungsfälle, wo das Eingangssignalformat und das Ausgangssignal bekannt sind, existieren Teillösungen zur Signalverbesserung. Diese kommen ohne Signalanalyse aus, da sowohl das Eingangsformat als auch das gewünschte Ausgangsformat bekannt sind. Die Existenz solcher Teillösungen soll benutzt werden, um einerseits den berechtigten Wunsch der Teilnehmer nach Signalverbesserung zu zeigen und andererseits die Lösbarkeit der Aufgabe für Teilprobleme zu demonstrieren. Die Empfängerindustrie bietet schon länger die 100Hz-Technik an. Up-Converter zur Standardwandlung gibt es für bestimmte Formate.

Alle bekannten Verfahren haben jedoch den Mangel, daß sie nur Teillösungen ermöglichen und für Stationen im Netz nicht anwendbar sind. Es sind zwar sowohl Signalanalyse- Verfahren als auch Möglichkeiten zur Verbesserung einzelner bzw. einiger Signalparameter bekannt. Diese zusätzlichen neuen Netzfunktionen sind in ihrer Komplexität aber nicht bekannt.

Die Erfindung wird nachfolgend anhand von Ausführungsbeispielen näher erläutert. In den zugehörigen Zeichnungen zeigen die:
- Fig. 1: einen grundsätzlichen Signalverlauf von der Quelle bis zur Bildwiedergabe, wobei die Quelle und die anschließende Übertragungsstrecke schmalbandig sind, und
- Fig. 2: Baugruppen für die Signalbearbeitung

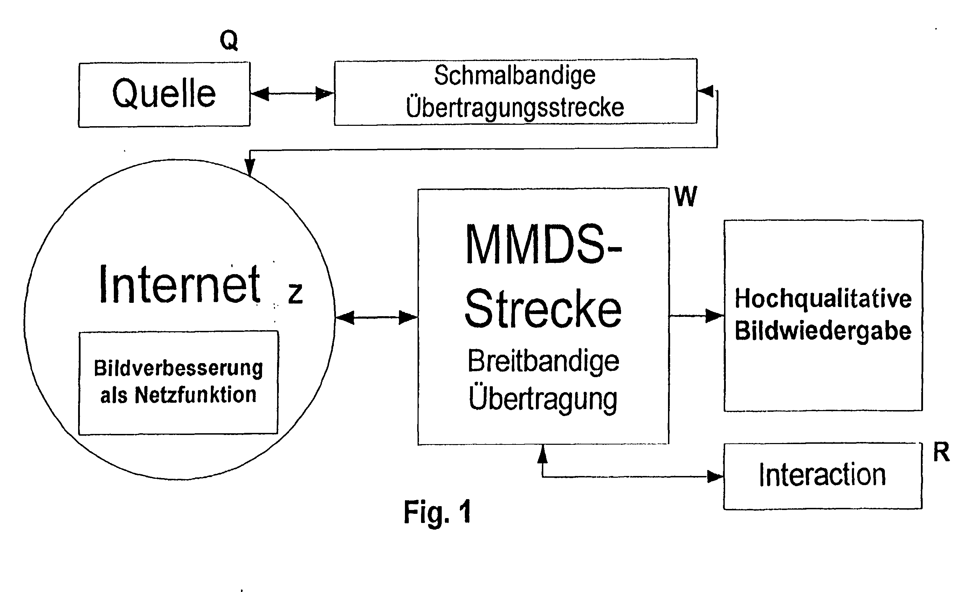

Gemäß der Fig. 1 wird zur Erhöhung der Signalqualität im Netz eine neue Funktion, d.h. die Signalverbesserung als Netzfunktion durchgeführt.

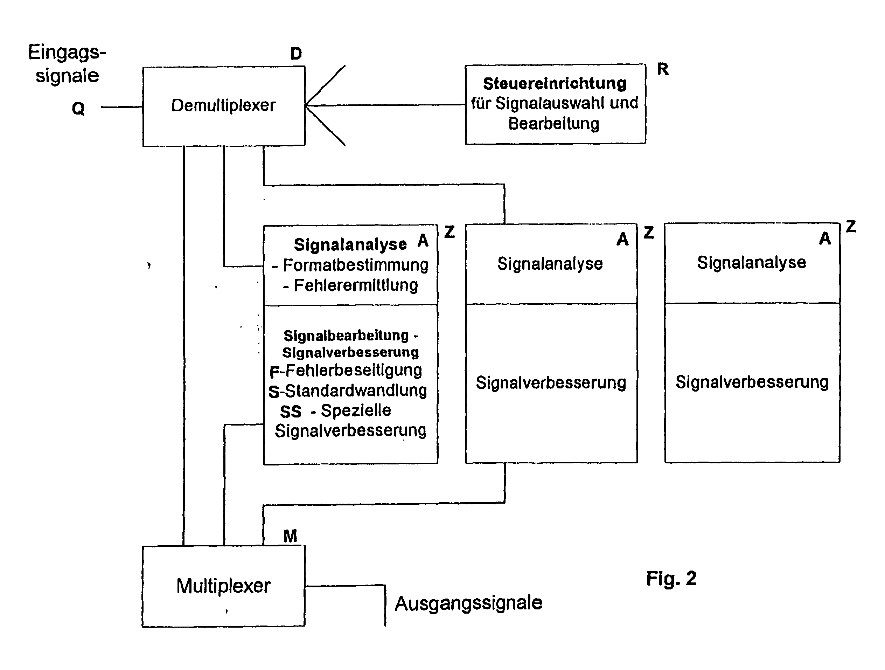

Zu den Baugruppen der Fig. 2 wird die Wirkungsweise im folgenden näher beschrieben:
Mittels einer Steuereinrichtung R kann die Signalbearbeitung zur Verbesserung der Signale vom Teilnehmer ein- und ausgeschaltet werden.

Der eigentlichen Signalverbesserung ist eine Signalanalyse A vorgeschaltet. Im einfachsten Fall ausschließlich bekannter Parameter können die Entscheidungen der Signalanalyse auch aus einer Tabelle entnommen werden. Bestandteil dieser Signalanalyse A ist die Bestimmung des Eingangsformates. In der Steuereinrichtung R wird das vom Nutzer gewünschte Ausgangsformat angefordert. Aus diesen Eingangsgrößen werden die Standardwandlung, die Fehlerbeseitigung und die spezielle Signalverbesserung zur Signalverbesserung für diesen Nutzer festgelegt.

Bei der Signalanalyse A werden für die eingeschaltete Zeit auch automatische Fehlerermittlungen durchgeführt. So entstehen beim codieren mit zu geringer Datenrate oft Blockfehler. Solche Fehler können durch entsprechende (Fehlerbehandlungen) spezielle Signalverbesserungen SS minimiert werden. Bei Blockfehlern wird beispielsweise mittels eines Algorithmus entschieden ob der fehlerhafte Block durch einen Block aus einer benachbarten Fläche, einem früheren Bild oder durch Neuberechnung ersetzt wird.

Die Figur 2 zeigt die Einheiten Signalanalyse A und Signalverbesserung F; S; und SS mehrfach. Die erste Einheit kann auf das Bildsignal des (Teilnehmers) Nutzers 1 angewendet werden. Die zweite Einheit kann beispielsweise von einem weiteren (Teilnehmer) Nutzer benutzt werden. Die Verbesserung des Tonsignals ist theoretisch auch in gleicher Weise möglich, bedeutet aber um ein Vielfaches geringeren Aufwand und ist deshalb nicht unbedingt als Netzfunktion zu realisieren; jedoch kann für andere digitale Signale, wie z. B. Meßsignale, ebenfalls eine Verbesserung erwünscht sein.

Sind in der Steuereinrichtung R die entsprechenden Formate bekannt, so kann auch eine Tabelle benutzt werden.

Die Nutzung der Erfindung bedeutet für die weitergeleiteten Signale eine Werterhöhung. Sie ist gerade für neue Multi-Media-Dienste, wo auch oft schmalbandige Quellen oder Zugänge mit beteiligt sind, notwendig. Für interaktive Dienste ist natürlich bei der Entwicklung der Schaltungen für die Signalverbesserung auf möglichst geringe Verzögerung zu achten. Bei interaktiven Diensten kann auch zusätzlich eine down-convertierung in analoger Weise benutzt werden.

Die Nutzung ist auch nicht auf bestimmte Arten von Übertragungsstrecken begrenzt. Sie kann insbesondere für alle breitbandigen Zugänge (Kabelverbindungen, ADSL oder xDSL oder HF-Verbindungen zu Teilnehmern) genutzt werden.

Für MPEG-Signale (Bild-, Ton- und Datensignale, die nach der Vorschrift der Moving Pictures Experts Group codiert sind) und für ATM-Signale (Asynchronous Transfer Mode) ist das Verfahren auch anwendbar.

## Patentansprüche

1. Verfahren für die Übertragung von digitalisierten breitbandigen Daten, die von unterschiedlichen Quellen (Q) zur Weiterübertragung geliefert, von Nutzern über einen Rückkanal (R) ausgewählt werden, wobei die Quellensignale (Q) zunächst einer Signalanalyse unterzogen werden,
**dadurch gekennzeichnet, dass** nach der Signalanalyse die Datensignale von geringerer Qualität, als der auswählende Nutzer verlangt, einer Standardwandlung und einer Fehlerbeseitigung unterzogen werden.

2. Verfahren nach Anspruch 1, **dadurch gekennzeichnet, dass**
- bei multiplexierten Datenströmen vor der Signalanalyse eine Demultiplexierung (D) durchgeführt wird, danach
- die demultiplexierten Signale hinsichtlich *ihres Formats* und ihrer Fehler analysiert werden (A), danach
- eine Fehlerbeseitigung (F) und bei gegenüber den analysierten Signalformaten abweichenden Forderungen an *das Format* Standardumwandlungen (S) und, bei qualitativ verbesserungsfähigen Signalen, Signalverbesserungen (SS) durchgeführt werden und,
- bei eingangs demultiplexierten Signalen wieder eine Multiplexierung (M) durchgeführt wird.

3. Verfahren nach Anspruch 1, **dadurch gekennzeichnet, dass** sowohl Bildsignale als auch andere digitale Signale, Mess- und Tonsignale, als Quellensignale in gleicher Weise behandelt werden.

4. Verfahren nach Anspruch 1, **dadurch gekennzeichnet, dass** die Signalbearbeitung vom Nutzer über den Rückkanal (R) schaltbar gestaltet wird.

5. Verfahren nach Anspruch 1, **dadurch gekennzeichnet, dass** die Entscheidungen der Signalanalyse aus einer Tabelle entnommen werden.

6. Verfahren nach Anspruch 1, **dadurch gekennzeichnet, dass** bei bidirektionalen Signalübertragungen für den Rückkanal eine Abwärtskonvertierung durchgeführt wird.

7. Vorrichtung zur Durchführung des Verfahrens nach Anspruch 1 bis 6, mit einer Telekommunikations-Nachrichtennetzstation für die Übertragung von digitalisierten Daten, welche eine Signalanalyseeinrichtung (A) und eine Steuereinrichtung zur Steuerung durch einen Nutzer über einen Rückkanal (R) entsprechend dessen Qualitätsanforderungen enthält, **gekennzeichnet durch** eine mit der Signalanalyseeinrichtung (A) verbundene Einrichtung zur Signalverbesserung mit Mitteln zur Standardwandlung (S) und Fehlerbeseitigung (F) und wobei die Einrichtung zur Signalverbesserung so ausgelegt ist, dass Datensignale von geringerer Qualität, als vom Nutzer verlangt, einer Standardwandlung und einer Fehlerbeseitigung unterzogen werden.

8. Vorrichtung nach Anspruch 7, **gekennzeichnet durch** Demultiplexer- Multiplexereinrichtungen (D, M) und wobei die Steuereinrichtung für die Steuerung **durch** mehrere Nutzer mit den Demultiplexer-Multiplexereinrichtungen (D, M) verbunden ist.

## Claims

1. Method for transmission of digitized broadband data that are delivered from different sources (Q) for relay transmission, and are selected by users through a reverse channel (R), wherein the source signals (Q) are first subjected to a signal analysis,
**characterized in that**
the data signals having lower quality than required by the selecting user are subjected to a standard conversion and an error correction after the signal analysis.

2. Method according to claim 1, **characterized in that**
- in the case of multiplexed data streams, a demultiplexing (D) is carried out before the signal analysis, and then
- the demultiplexed signals are analyzed (A) with regard to *their format* and their errors, and then
- an error correction (F) is carried out and, in the case of requirements deviating from the analyzed signal formats, standard conversions (S) to the *format* are carried but, and, in the case of signals whose quality can be improved, signal improvements (SS) are carried out, and
- in the case of signals that were demultiplexed at the outset, multiplexing (M) is again carried out.

3. Method according to claim 1, **characterized in that** image signals and other digital signals, as well as measurement signals and audio signals, are treated in identical manner as source signals.

4. Method according to claim 1, **characterized in that** signal processing is switchably configured by the user through the reverse channel (R).

5. Method according to claim 1, **characterized in that** the decisions of the signal analysis are taken from a table.

6. Method according to claim 1, **characterized in that**, in the case of bidirectional signal transmissions, a down-conversion is carried out for the reverse channel.

7. Device for carrying out the method according to claims 1 through 6, having a telecommunications network station for the transmission of digitized data, containing a signal analysis device (A) and a control device for control by a user through a reverse channel (R) in accordance with the user's quality requirements, **characterized by** a device for signal improvement that is connected to the signal analysis device (A) and that has means for standard conversion (S) and error correction (F) and wherein the device for signal improvement is designed such that data signals of lower quality than required by the user are subjected to a standard conversion and an error correction.

8. Device according to claim 7, **characterized by** demultiplexer / multiplexer devices (D, M), and wherein the control device for control by multiple users is connected to the demultiplexer/ multiplexer devices (D, M).

## Revendications

1. Procédé de transmission de données numérisées à large bande fournies par des sources différentes (Q) pour être réacheminées, sélectionnées par des utilisateurs par l'intermédiaire d'une voie de retour (R), les signaux sources (Q) étant dans un premier temps soumis à une analyse des signaux,
**caractérisé en ce que,**
après analyse, les signaux de données de qualité inférieure à celle requise par l'utilisateur les sélectionnant, sont soumis à une conversion standard et à une élimination des erreurs.

2. Procédé selon la revendication 1, **caractérisé en ce que**,
- si les flux de données sont multiplexés, l'analyse des signaux sera précédée d'un démultiplexage (D),
- les signaux démultiplexés étant ensuite analysés par rapport à leur format et à leurs erreurs (A), puis
- une élimination des erreurs (F) et, en cas d'exigences de format divergentes par rapport aux formats des signaux analysés, des conversions standard (S) et, en cas de signaux susceptibles d'être améliorés en termes de qualité, des améliorations des signaux (SS) étant effectuées, et,
- en cas de signaux initialement démultiplexés, un nouveau multiplexage (M) étant effectué.

3. Procédé selon la revendication 1, **caractérisé en ce que** tous les signaux sources que ce soient des signaux d'image ou tous autres signaux numériques, signaux de mesure et acoustiques, sont traités de manière identique.

4. Procédé selon la revendication 1, **caractérisé en ce que** le traitement des signaux est conçu de manière à pouvoir être commuté par l'utilisateur par l'intermédiaire de la voie de retour (R).

5. Procédé selon la revendication 1, **caractérisé en ce que** les décisions de l'analyse des signaux sont prélevées dans un tableau.

6. Procédé selon la revendication 1, **caractérisé en ce que**, dans le cas de transmissions de signaux bidirectionnelles, une conversion décroissante est effectuée pour la voie de retour.

7. Dispositif pour la mise en oeuvre du procédé selon les revendications 1 à 6, comportant une station de réseau de télécommunication pour la transmission de données numérisées contenant un système d'analyse des signaux (A) et un système de commande pour la commande par un utilisateur par l'intermédiaire d'une voie de retour (R) conformément aux exigences de qualité de ce dernier, **caractérisé par** un système d'amélioration des signaux relié au système d'analyse des signaux (A), doté de moyens de conversion standard (S) et d'élimination d'erreurs (F) et le système d'amélioration des signaux étant conçu de manière que des signaux de données de qualité inférieure à celle requise par l'utilisateur soient soumis à une conversion standard et à une élimination des erreurs.

8. Dispositif selon la revendication 7, **caractérisé par** des systèmes de démultiplexage / de multiplexage (D, M), le système de commande pour la commande par plusieurs utilisateurs étant relié aux systèmes de démultiplexage / multiplexage (D, M).
